# EUROPÄISCHE PATENTANMELDUNG

(11) **EP 1 067 026 A1**
(43) Veröffentlichungstag der Anmeldung: **10.01.2001**
(21) Anmeldenummer: 00112735.6
(22) Anmeldetag: 16.06.2000
(51) Int. Cl.: B60R 21/13

(54) **Überrollbügel und diesen mit der Karosserie verbindendes Deformationselement**

(30) Priorität: 06.07.1999 DE 19931224
(71) Anmelder: Bayerische Motoren Werke Aktiengesellschaft, 80809 München (DE)
(72) Erfinder: Scheible, Tobias, 87700 Memmingen (DE)

(57) **Zusammenfassung**

Ein Überrollschutzsystem für ein Fahrzeug weist wenigstens einen Überrollbügel (2) auf, der über ein Deformationselement (5, 6) mit der Karosserie (1) des Fahrzeugs verbunden ist. Der Überrollbügel (2) besteht aus einem spröden Werkstoff, beispielsweise einem faserverstärkten Kunststoff. Das Deformationselement (5, 6) verformt sich im Belastungsfall so weit, daß ein Bruch des Überrollbügels (2) sicher vermieden wird.

## Beschreibung

Die Erfindung betrifft ein Überrollschutzsystem für ein Fahrzeug mit wenigstens einem Überrollbügel.

Derartige Überrollschutzsysteme werden insbesondere für oben offene Personenkraftwagen eingesetzt, um im Fall eines Überschlages das Verletzungsrisiko für die Insassen zu minimieren.

Aufgabe der Erfindung ist es, die bekannten Überrollschutzsysteme weiterzuentwickeln.

Diese Aufgabe wird durch die Merkmale des Anspruchs 1 gelöst.

Überrollbügel bekannter Überrollschutzsysteme bestehen in vielen Fällen aus Stahl und haben demzufolge ein vergleichsweise hohes Gewicht. Durch den Einsatz von Leichtmetallen, wie beispielsweise Aluminiumlegierungen, kann eine Gewichtsreduzierung erzielt werden.

Zur weiteren Gewichtseinsparung bei gleichzeitiger Erhöhung der Steifigkeit können Überrollbügel aus faserverstärkten Kunststoffen gebildet werden, wie an sich aus der DE 298 07 322 U1 bekannt. Um zu vermeiden, daß ein derartiger Überrollbügel unter Überlast bricht und hierdurch scharfkantige Bruchflächen entstehen, die die Insassen des Fahrzeuges gefährden könnten, ist erfindungsgemäß zwischen dem Überrollbügel und der Fahrzeugkarosserie wenigstens ein Deformationselement vorgesehen, das sich im Belastungsfall so weit verformt, daß ein Bruch des Überrollbügels nicht mehr stattfinden kann. Selbstverständlich ist die Erfindung nicht auf faserverstärkte Kunststoffe beschränkt, sondern auf alle Arten spröder Materialien für Überrollbügel anwendbar.

Zwar ist aus der DE 25 53 822 C2 ein Überrollschutzsystem für ein land- und forstwirtschaftlich nutzbares Fahrzeug bekannt, dessen Fahrerkabine und/oder Überrollbügel über Deformationselemente in Form von Lagerböcken mit dem Fahrgestell verbunden ist. Bei einem Umsturz des Fahrzeuges wird hierbei ein großer Teil der durch den Aufprall einwirkenden Energie durch Verformung der Lagerböcke verbraucht, so daß die Fahrerkabine mit einer entsprechend geringeren Steifigkeit ausgeführt sein kann. Hierdurch ist eine Materialeinsparung möglich.

Im Gegensatz hierzu wird mit der vorliegenden Erfindung ein andersartiger Zweck verfolgt, da nicht die Steifigkeit des Überrollbügels verringert, sondern durch Verwendung eines hochfesten Werkstoffes gerade die Steifigkeit des Überrollschutzsystems erhöht werden soll. Der sich aus der Materialwahl ergebende Nachteil der Sprödigkeit des Werkstoffes wird erfindungsgemäß durch ein Deformationselement ausgeglichen. Während bei metallischen Werkstoffen dem Versagen eine zum Teil beträchtliche Bruchdehnung vorausgeht, brechen Bauteile beispielsweise aus Faserverbundkunststoffen schlagartig bei Überschreitung einer bestimmten Belastungsgrenze. Die Erfindung liegt somit in Abgrenzung zum Stand der Technik darin, einen Überrollbügel aus Faserverbundkunststoff mit einem Deformationselement zu kombinieren, das sich bei einer Belastung im Bereich der Bruchgrenze des Werkstoffes des Überrollbügels so weit verformt, daß ein Bruch des Überrollbügels sicher vermieden wird.

Dämpfende Zwischenlagen, wie sie beispielsweise aus der US-PS 3,353,852 bekannt sind, dienen lediglich der Schwingungsisolierung und können den Erfindungsgegenstand nicht nahelegen. Kunststoffhülsen an den Enden der Überrollbügel, wie sie aus der DE 297 00 092 U1 bekannt sind, begrenzen lediglich den Einsteckweg bzw. erleichtern den Schwenkvorgang des Überrollbügels.

Die Unteransprüche beschreiben vorteilhafte Ausgestaltungen der Erfindung.

Die Erfindung kann sowohl mit reversibel als auch irreversibel verformbaren Deformationselementen realisiert werden. Irreversibel verformbare Deformationselemente bestehen bevorzugt aus einem metallischen Werkstoff und weisen beispielsweise eine Schwachstelle auf, die bei Überbelastung zu einer definierten Verformung führt, in der Regel zu einem Abknicken des Deformationselementes um ca. 90°. Reversibel arbeitende Deformationselemente hingegen weisen Federelemente auf, die unter entsprechender Belastung nachgeben. Der Vorteil liegt hierbei darin, daß bei einem Mehrfachüberschlag des Fahrzeugs das Überrollschutzsystem sich nach der ersten Belastung wieder aufrichten kann und somit weiterhin in Funktion bleibt. Es sind jedoch geeignete Maßnahmen zu treffen, um ein vorzeitiges Nachgeben des Deformationselements zu verhindern. Dies kann beispielsweise durch eine starke progressive Kennlinie des Federelementes oder durch eine Kombination des Federelementes mit einem plastisch verformbaren Element bewerkstelligt werden.

Mögliche Ausführungsbeispiele der Erfindung sind in der Zeichnung dargestellt und werden nachfolgend näher erläutert. Es zeigt:
- Figur 1: eine perspektivische Ansicht eines erfindungsgemäßen Überrollschutzsystems und
- Figuren 2 und 3: Ausführungsbeispiele von Deformationselementen in Schnittdarstellung.

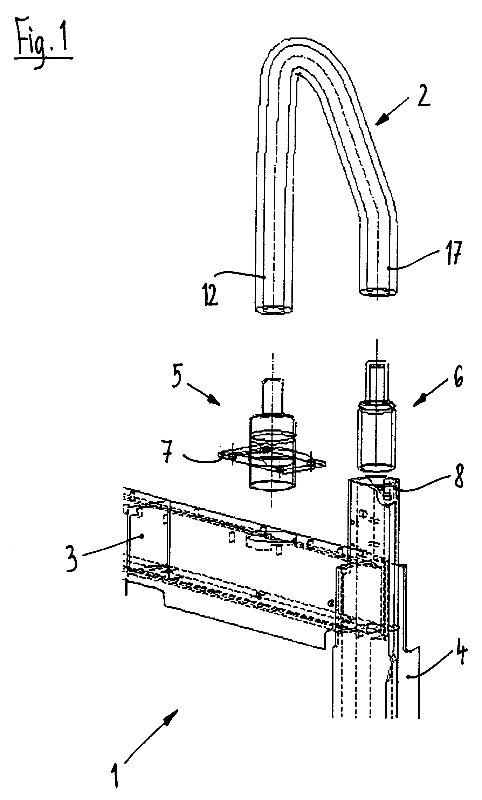

Figur 1 zeigt einen Ausschnitt aus der Struktur einer Fahrzeugkarosserie 1, an die ein Überrollbügel 2 eines Überrollschutzsystems angebunden ist. Hierbei ist wegen des spiegelbildlichen Aufbaus der Karosserie 1 lediglich eine Fahrzeughälfte dargestellt. Die Karosserie 1 weist einen Querträger 3 sowie je Fahrzeugseite einen Karosseriepfosten 4 auf. Der Überrollbügel 2 ist über zwei Deformationselemente 5 und 6 an die Karosserie 1 angebunden. Das innere Deformationselement 5 ist über eine Verbindungsplatte 7 mit dem Querträger 3 verschraubt. Das äußere Deformationselement 6 ist in den oberen rohrförmigen Abschnitt 8 des Karosseriepfostens 4 eingesteckt.

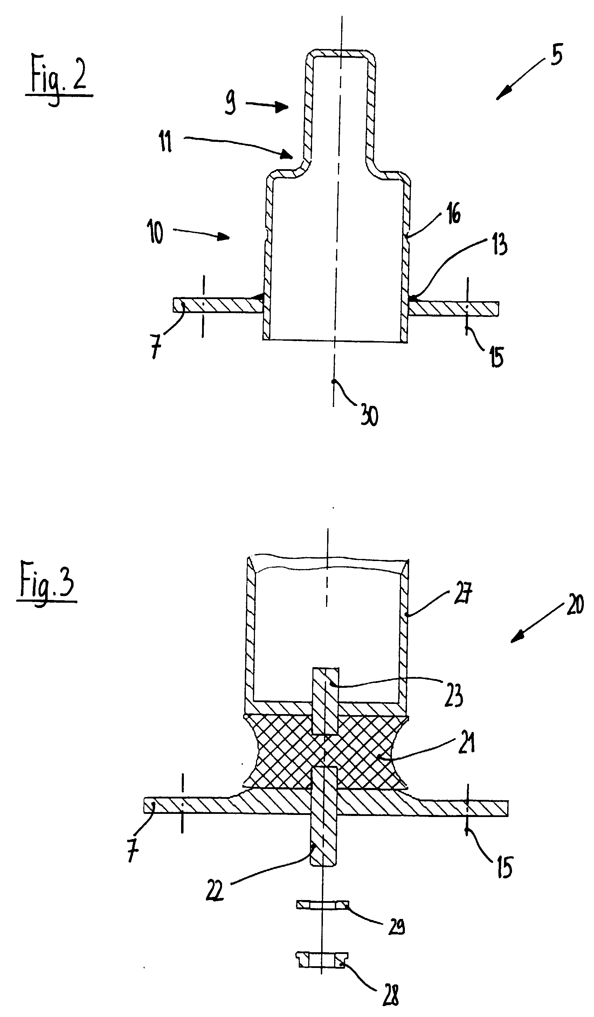

Figur 2 zeigt das Deformationselement 5 in vergrößerter Schnittdarstellung. Das Deformationselement 5 weist zwei Bereiche 9 und 10 unterschiedlichen Durchmessers auf, die durch einen Absatz 11 voneinander getrennt sind. Der geschlossen topfförmige obere Bereich 9 mit kleinerem Durchmesser dient als Aufnahmeabschnitt für den inneren Schenkel 12 des Überrollbügels 2 aus Figur 1, der auf den Abschnitt 9 aufgesteckt und anschließend mit dem Abschnitt 9 verschraubt und/oder verklebt wird.

An der äußeren Mantelfläche des Abschnittes 10 ist über eine Schweißnaht 13 die bereits oben beschriebene Verbindungsplatte 7 angebunden, die senkrecht zur Mittellängsachse 30 des Deformationselementes 5 ausgerichtet und über vier Verbindungsschrauben 15 mit dem Querträger 3 verschraubbar ist. Erfindungsgemäß weist der Abschnitt 10 am Außenumfang eine ringförmige Vertiefung 16 auf, die einen Bereich reduzierter Tragfähigkeit herstellt, durch den ein definiertes Nachgeben des Deformationselementes 5 bei Überschreitung einer bestimmten Belastung erreicht wird. Die Vertiefung 16 ist unter Berücksichtigung der Duktilität des Materials des Deformationselementes 5 hierbei so zu bemessen, daß sich das Deformationselement 5 im Belastungsfall lediglich verformt, jedoch nicht bricht.

Selbstverständlich kann die Vertiefung 16 auch nur an einem Teil des Umfangs des Abschnittes 10 angeordnet sein. Eine Reduzierung des Widerstandsmomentes bzw. der Knicksteifigkeit des Querschnittes des Deformationselementes 5 kann alternativ auch durch andere Maßnahmen, wie beispielsweise fensterartige Öffnungen, entsprechende Wärmebehandlung etc. erreicht werden. Das Deformationselement 5 besteht bevorzugt aus einem metallischen Werkstoff.

Das Deformationselement 6 gemäß Figur 1 weist keine Verbindungsplatte 7 auf, sondern wird mit seinem Abschnitt 10 unmittelbar in den Abschnitt 8 der Karosserie 1 eingeführt und durch Verklebung und/oder Verschraubung mit dem Karosseriepfosten 4 verbunden. Ansonsten ist das Deformationselement 6 baugleich mit dem Deformationselement 5 ausgeführt und nimmt mit seinem Abschnitt 9 den Endabschnitt des äußeren Schenkels 17 des Überrollbügels 2 auf.

Figur 3 zeigt eine weitere Ausführungsform eines Deformationselementes 20, das ein elastisch verformbares Gummielement 21 aufweist. Vom Gummielement 21 stehen beidseitig Gewindebolzen 22 bzw. 23 ab. Mit dem unteren Gewindebolzen 22 ist eine Verbindungsplatte 7 über eine Mutter 28 und eine Unterlegscheibe 29 verschraubt. Die Anbindung der Platte 7 an den Querträger 3 erfolgt wiederum über Verbindungsschrauben 15. Oberseitig ist an den Gewindebolzen 23 ein Abschnitt 27 angeschraubt, in den der untere Endabschnitt beispielsweise des inneren Schenkels 12 des Überrollbügels 2 innenseitig eingesteckt und nachfolgend verklebt und/oder verschraubt wird.

## Patentansprüche

1. Überrollschutzsystem für ein Fahrzeug, mit wenigstens einem Überrollbügel (2), der über ein Deformationselement (5, 6, 20) mit der Karosserie (1) des Fahrzeugs verbunden ist, wobei der Überrollbügel (2) aus einem spröden Werkstoff besteht und das Deformationselement (5, 6, 20) bei einer Belastung im Bereich der Bruchgrenze des Werkstoffes des Überrollbügels (2) sich so weit verformt, daß ein Bruch des Überrollbügels (2) nicht stattfindet.

2. Überrollschutzsystem nach Anspruch 1,
dadurch gekennzeichnet, daß sich das Deformationselement (5, 6) im Belastungsfall plastisch verformt.

3. Überrollschutzsystem nach Anspruch 2,
dadurch gekennzeichnet, daß das Deformationselement (5, 6) einen definierten, lokal begrenzten Verformungsbereich (16) aufweist.

4. Überrollschutzsystem nach Anspruch 3,
dadurch gekennzeichnet, daß der Verformungsbereich (16) eine gegenüber dem übrigen Abschnitt (10) des Deformationselementes (5) reduzierte Materialstärke aufweist.

5. Überrollschutzsystem nach Anspruch 1,
dadurch gekennzeichnet, daß sich das Deformationselement (20) im Belastungsfall elastisch verformt.

6. Überrollschutzsystem nach Anspruch 5,
dadurch gekennzeichnet, daß das Deformationselement (20) einen Verformungskörper (21) aus einem elastomeren Werkstoff aufweist, der zwischen karosserieseitigen und überrollbügelseitigen Aufnahmeabschnitten (7, 27) des Deformationselementes (20) angeordnet ist.

7. Überrollschutzsystem nach Anspruch 5,
dadurch gekennzeichnet, daß das Deformationselement einen Verformungskörper in Form einer Feder aus einem metallischen Werkstoff aufweist.

8. Überrollschutzsystem nach einem der vorgenannten Ansprüche,
dadurch gekennzeichnet, daß das Deformationselement (5, 6, 20) einen zylindrischen Aufnahmeabschnitt (9, 27) zur formschlüssigen Verbindung mit einem rohrförmigen Schenkel (12) des Überrollbügels (2) aufweist.

9. Überrollbügel nach einem der vorgenannten Ansprüche,
dadurch gekennzeichnet, daß das Deformationselement (6) einen zylindrischen Aufnahmeabschnitt (10) zur formschlüssigen Verbindung mit einem rohrförmigen Aufnahmebereich (8) der Karosserie (1) aufweist.

10. Überrollschutzsystem nach einem der Ansprüche 1 bis 8,
dadurch gekennzeichnet, daß das Deformationselement (5, 20) eine etwa senkrecht zur Mittellängsachse (30) des Deformationselementes (5, 20) ausgerichtete Verbindungsplatte (7) zur Anbindung des Deformationselementes (5, 20) an die Karosserie (1) aufweist.

11. Überrollschutzsystem nach einem der vorgenannten Ansprüche,
dadurch gekennzeichnet, daß der Überrollbügel (2) aus einem Faserverbundmaterial besteht.

12. Deformationselement (5, 6, 20) für ein Überrollschutzsystem nach einem der vorgenannten Ansprüche.
